# EUROPEAN PATENT APPLICATION

(11) **EP 4 641 782 A1**
(43) Date of publication of application: **29.10.2025**
(21) Application number: 23933787.6
(22) Date of filing: 01.11.2023
(51) Int. Cl.: H01M 50/14, H01M 50/10, H01M 50/593

(54) **BATTERY CELL, BATTERY, AND ELECTRIC APPARATUS**

(30) Priority: 18.04.2023 CN 202310417400
(71) Applicant: Contemporary Amperex Technology Co., Limited, Ningde, Fujian 352100 (CN)
(72) Inventor: DU, Xianglong, Ningde, Fujian 352100 (CN); XU, Hu, Ningde, Fujian 352100 (CN); NIU, Shaojun, Ningde, Fujian 352100 (CN); JIN, Haizu, Ningde, Fujian 352100 (CN)
(74) Representative: Gong, Jinping
(86) International application number: PCT/CN2023/129106
(87) International publication number: WO 2024/216920

(57) **Abstract**

The present application discloses a battery cell, a battery, and a power consuming device. The battery cell includes a housing, an electrode assembly, an insulating member, and a patch. The electrode assembly is accommodated in the housing. The insulating member is arranged on an outer side of the electrode assembly, and the insulating member has a first outer surface on a side facing away from the electrode assembly. The patch is attached to the first outer surface and covers a part of the first outer surface, the patch has a second outer surface on a side facing away from the insulating member, and surface roughness of at least a partial region of the second outer surface is greater than surface roughness of the first outer surface.

## Description

### CROSS-REFERENCE TO RELATED APPLICATIONS

The present application claims priority to Chinese Patent Application No. 202310417400.1, entitled "BATTERY CELL, BATTERY, AND POWER CONSUMING DEVICE" and filed on April 18, 2023, which is incorporated herein by reference in its entirety.

### TECHNICAL FIELD

The present application relates to the field of batteries, and in particular, to a battery cell, a battery, and a power consuming device.

### BACKGROUND

A battery cell is widely used in electronic devices, for example, a mobile phone, a notebook computer, a battery car, an electric vehicle, an electric airplane, an electric ship, an electric toy vehicle, an electric toy ship, an electric toy airplane, or an electric tool.

In the development of battery technologies, how to improve the reliability of the battery cell is a research direction in the battery technologies.

### SUMMARY

The present application provides a battery cell, a battery, and a power consuming device, so that the reliability can be improved.

According to a first aspect, the present application provides a battery cell, including a housing, an electrode assembly, an insulating member, and a patch. The electrode assembly is accommodated in the housing. The insulating member is arranged on an outer side of the electrode assembly, and the insulating member has a first outer surface on a side facing away from the electrode assembly. The patch is attached to the first outer surface and covers a part of the first outer surface, the patch has a second outer surface on a side facing away from the insulating member, and surface roughness of at least a partial region of the second outer surface is greater than surface roughness of the first outer surface.

In a shaping process of the battery cell, metal particles may remain in the housing. The insulating member can protect the electrode assembly, so that a possibility that the metal particles puncture the electrode assembly is reduced, and a risk of short circuit is reduced, thereby improving the reliability of the battery cell. The second outer surface of the patch has relatively large surface roughness. Therefore, when the battery cell is subject to external impact, the patch encounters relatively large friction resistance, so that sliding of the electrode assembly in the housing is reduced through the insulating member, and a risk of failure of the battery cell is reduced, thereby improving the reliability of the battery cell. The patch covers only a part of the first outer surface, an edge of the patch forms a step structure protruding from the first outer surface, and the step structure can also increase resistance to movement of the patch when the battery cell is subject to external impact, thereby reducing sliding of the electrode assembly in the housing.

In some embodiments, the patch includes a base layer and an adhesive layer, and the adhesive layer is arranged between the first outer surface and the base layer and adheres the first outer surface and the base layer. The base layer includes the second outer surface.

By arranging the adhesive layer, the base layer may be adhered to the first outer surface, so that relative sliding between the base layer and the insulating member is reduced when the battery cell is subject to external impact. The base layer can separate the adhesive layer from the housing, thereby reducing a risk of friction abrasion of the adhesive layer.

In some embodiments, the second outer surface is provided with a plurality of protrusions that are arranged at intervals. The protrusions are arranged on the second outer surface to increase the surface roughness of the second outer surface, so that when the battery cell is subject to external impact, the friction resistance to the patch is increased, sliding of the electrode assembly in the housing is reduced, and a risk of failure of the battery cell is reduced, thereby improving the reliability of the battery cell.

In some embodiments, the protrusion is in a shape of a curve. The curve-shaped protrusion can generate relatively large friction resistance in many directions, so that sliding of the electrode assembly in the housing is effectively reduced, and a risk of failure of the battery cell is reduced, thereby improving the reliability of the battery cell.

In some embodiments, two ends of the protrusion respectively extend to two opposite edges of the second outer surface. The protrusion has a relatively large extension length, so that a contact area between the protrusion and the housing may be increased. In this way, when the battery cell is subject to external impact, the friction resistance is increased, thereby effectively reducing sliding of the electrode assembly in the housing.

In some embodiments, the battery cell includes a plurality of patches, and the plurality of patches are arranged at intervals.

In a case that a total area is consistent, compared with attaching a single patch with a relatively large area, a plurality of patches with a relatively small area are attached, so that the electrode assembly encounters more uniform resistance when the battery cell is subject to external impact, thereby reducing an offset risk of the electrode assembly. In addition, the edge of each patch may form a step structure protruding from the first outer surface, and the step structure can also increase the resistance to movement of the patch when the battery cell is subject to external impact.

In some embodiments, the plurality of patches are arranged at intervals in a circumferential direction of the electrode assembly.

In some embodiments, the plurality of patches are arranged at intervals in a direction perpendicular to the circumferential direction.

In some embodiments, the plurality of patches are arranged at intervals in a circumferential direction of the electrode assembly and a direction perpendicular to the circumferential direction.

In some embodiments, the surface roughness of the second outer surface is greater than or equal to 10 µm. The second outer surface has relatively large surface roughness. Therefore, when the battery cell is subject to external impact, the patch encounters relatively large friction resistance, so that sliding of the electrode assembly in the housing is reduced, and a risk of failure of the battery cell is reduced, thereby improving the reliability of the battery cell.

In some embodiments, the surface roughness of the second outer surface is Ra, and Ra meets: 10 µm≤Ra≤ 3600 µm. By setting Ra to range from 10 µm to 3600 µm, the friction resistance to the patch and space occupied by the patch are balanced, so that a loss of an energy density of the battery cell is reduced while the friction resistance to the patch meets a requirement.

In some embodiment, 300 µm≤Ra≤600 µm, to further balance the friction resistance to the patch and the space occupied by the patch, so that a loss of an energy density of the battery cell is reduced while the friction resistance to the patch meets a requirement.

In some embodiments, a total area of the first outer surface is S1, an area of a region of the first outer surface covered by the patch is S2, and 0.02≤S2/S1≤0.5.

S2/S1 is positively correlated with the friction resistance to the patch, and is also positively correlated with the space occupied by the patch. By limiting S2/S1 to range from 0.02 to 0.5, the friction resistance to the patch and the space occupied by the patch may be balanced, so that a loss of an energy density of the battery cell is reduced while the friction resistance to the patch meets a requirement.

In some embodiments, the electrode assembly includes a plate and an isolation member that are arranged in a winding manner; and the insulating member is attached to the isolation member and is configured to restrain a winding tail end of the isolation member. The insulating member can restrain the isolation member, to reduce a risk that the isolation member is scattered, thereby reducing deformation of the electrode assembly.

In some embodiments, the insulating member surrounds the electrode assembly. The insulating member surrounds the electrode assembly, so that an outer peripheral surface of the electrode assembly can be effectively covered, thereby reducing a risk that the electrode assembly is punctured by the metal particles.

In some embodiments, in a thickness direction of the patch, the patch does not overlap with the winding tail end of the plate.

The electrode assembly may be expanded during charging, the expanded electrode assembly squeezes the housing through the patch, and correspondingly, the housing also applies a reaction force to the electrode assembly through the patch. If the patch overlaps with the winding tail end of the plate, the winding tail end of the plate encounters a relatively large reaction force, leading to stress concentration or even a risk that the plate is crushed. In the foregoing technical solution, the patch does not overlap with the winding tail end of the plate, so that stress concentration can be reduced, and a risk that the plate is broken can be reduced, thereby improving the cycle performance of the battery cell.

According to a second aspect, the present application provides a battery, including a plurality of battery cells according to any embodiment of the first aspect.

According to a third aspect, the present application provides a power consuming device, including the battery cell according to any embodiment of the first aspect, where the battery cell is configured to provide electric energy.

### BRIEF DESCRIPTION OF THE DRAWINGS

Features, advantages, and technical effects of exemplary embodiments of the present application are described below with reference to the accompanying drawings.
FIG. 1 is a schematic structural diagram of a vehicle according to some embodiments of the present application;
FIG. 2 is a schematic exploded view of a battery according to some embodiments of the present application;
FIG. 3 is a schematic structural diagram of a battery module shown in FIG. 2;
FIG. 4 is a schematic structural diagram of a battery cell according to some embodiments of the present application;
FIG. 5 is a schematic exploded view of the battery cell shown in FIG. 4;
FIG. 6 is a schematic structural diagram of an electrode assembly, an insulating member, and a patch of a battery cell according to some embodiments of the present application;
FIG. 7 is a schematic cross-sectional view of the electrode assembly, the insulating member, and the patch shown in FIG. 6;
FIG. 8 is a schematic diagram of a patch in an unfolded state according to some embodiments of the present application;
FIG. 9 is a schematic cross-sectional view of the patch shown in FIG. 8;
FIG. 10 is a schematic structural diagram of an electrode assembly, an insulating member, and a patch of a battery cell according to some other embodiments of the present application; and
FIG. 11 is a schematic structural diagram of an electrode assembly, an insulating member, and a patch of a battery cell according to yet some other embodiments of the present application.

In the accompanying drawings, components are not necessarily drawn to actual scale.

### DETAILED DESCRIPTION

To make the objectives, technical solutions, and advantages of the embodiments of the present application more comprehensible, the following clearly and completely describes the technical solutions in the embodiments of the present application with reference to the accompanying drawings in the embodiments of the present application. Apparently, the described embodiments are some rather than all of the embodiments of the present application. All other embodiments obtained by a person of ordinary skill in the art based on the embodiments of the present application without creative efforts shall fall within the protection scope of the present application.

To make the objectives, technical solutions, and advantages of the embodiments of the present application more comprehensible, the following clearly and completely describes the technical solutions in the embodiments of the present application with reference to the accompanying drawings in the embodiments of the present application. Apparently, the described embodiments are some rather than all of the embodiments of the present application. All other embodiments obtained by a person of ordinary skill in the art based on the embodiments of the present application without creative efforts shall fall within the protection scope of the present application.

Unless otherwise defined, all technical and scientific terms used in the present application have same meanings as those commonly understood by a person skilled in the art to which the present application belongs. In the present application, the terms used in the specification of the present application are only intended to describe specific embodiments, and are not intended to limit the present application. The terms "include", "have", and any variants thereof in the specification, claims, and accompanying drawings of the present application are intended to cover non-exclusive inclusion. The terms "first" and "second" in the specification, claims, and accompanying drawings of the present application are intended to distinguish different objects, rather than to describe a specific sequence or primary-secondary relationship.

"Embodiment" mentioned in the present application means that particular features, structures, or characteristics described with reference to the embodiment may be included in at least one embodiment of the present application. The term appearing at different positions of the specification may not refer to the same embodiment or an independent or alternative embodiment that is mutually exclusive with another embodiment.

In the description of the present application, it should be noted that, unless otherwise clearly specified and defined, terms such as "mount", "connect", "connection", and "attachment" shall be understood in a broad sense. For example, the connection may be a fixed connection, a detachable connection, or an integral connection; or the connection may be a direct connection, or an indirect connection through an intermediary, or internal communication between two elements. A person of ordinary skill in the art may understand specific meanings of the terms in the present application according to specific situations.

In the present application, the term "and/or" describes only an association relationship for describing associated objects and represents that there are three relationships may exist. For example, A and/or B may represent the following three cases: Only A exists, both A and B exist, and only B exists. In addition, in the present application, the character "/" generally indicates an "or" relationship between the associated objects.

In the embodiments of the present application, same reference numerals represent same components, and for brevity, in different embodiments, detailed description of the same components is omitted. It should be understood that, sizes such as thicknesses, lengths, and widths of various components and a size such as an entire thickness, length, or width of an integration device in the embodiments of the present application shown in the accompanying drawings are only exemplary description, and should not constitute any limitation to the present application.

"A plurality of" appearing in the present application indicates more than two (including two).

In the embodiments of the present application, the battery cell may be a secondary battery, where the secondary battery is a battery cell whose active material can be activated for continuous use through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, or a lead storage battery, which is not limited in the embodiments of the present application.

The battery cell generally includes an electrode assembly. The electrode assembly includes a positive electrode, a negative electrode, and an isolation member. During charging and discharging of the battery cell, active ions (for example, lithium ions) are intercalated and deintercalated back and forth between the positive electrode and the negative electrode. The isolation member is arranged between the positive electrode and the negative electrode, to prevent short circuit between the positive electrode and the negative electrode and to allow the active ions to pass through.

In some embodiments, the positive electrode may be a positive electrode plate, and the positive electrode plate may include a positive electrode current collector and a positive electrode active material arranged on at least surface of the positive electrode current collector.

For example, the positive electrode current collector has two surfaces opposite to each other in a thickness direction of the positive electrode current collector, and the positive electrode active material is arranged on either or both of the two opposite surfaces of the positive electrode current collector.

For example, the positive electrode current collector may be a metal foil or a composite current collector. For example, the metal foil may be made of silver-surface-processed aluminum or stainless steel, stainless steel, copper, aluminum, nickel, a carbon electrode, carbon, nickel, or titanium. The composite current collector may include a polymer material base layer and a metal layer. The composite current collector may be formed by forming a metal material (such as aluminum, aluminum alloy, nickel, nickel alloy, titanium, titanium alloy, silver, or silver alloy) on a polymer material substrate (such as a substrate of polypropylene, polyethylene terephthalate, polybutylene terephthalate, polystyrene, or polyethylene).

For example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials of batteries may also be used. One type of these positive electrode active materials may be used individually, or two or more types of these positive electrode active materials may be used in combination. An example of the lithium-containing phosphate may include, but is not limited to, at least one of lithium iron phosphate (for example, LiFePO4 (also referred to as LFP for short)), a composite material of lithium iron phosphate and carbon, lithium manganese phosphate (for example, LiMnPO4), a composite material of lithium manganese phosphate and carbon, lithium iron manganese phosphate, and a composite material of lithium manganese iron phosphate and carbon. An example of the lithium transition metal oxide may include, but is not limited to, at least one of a lithium cobalt oxide (for example, LiCoO₂), a lithium nickel oxide (for example, LiNiO₂), a lithium manganese oxide (for example, LiMnO₂ or LiMn₂O₄), a lithium nickel cobalt oxide, a lithium manganese cobalt oxide, a lithium nickel manganese oxide, a lithium nickel cobalt manganese oxide (for example, LiNi_{1/3}Co_{1/3}Mn_{1/3}O₂ (also referred to as NCM₃₃₃ for short), LiNi_{0.5}Co_{0.2}Mn_{0.3}O₂ (also referred to as NCM₅₂₃ for short), LiNi_{0.5}Co_{0.25}Mn_{0.25}O₂ (also referred to as NCM₂₁₁ for short), LiNi_{0.6}Co_{0.2}Mn_{0.2}O₂ (also referred to as NCM₆₂₂ for short), or LiNi_{0.8}Co_{0.1}Mn_{0.1}O₂ (also referred to as NCM₈₁₁ for short)), a lithium nickel cobalt aluminum oxide (for example, LiNi_{0.80}Co_{0.15}Al_{0.05}O₂), or modified compounds thereof.

In some embodiments, the positive electrode may be made of foamed metal. The foamed metal may be foamed nickel, foamed copper, foamed aluminum, foamed alloy, or foamed carbon. When the foamed metal is used as the positive electrode, a surface of the foamed metal may be not provided with the positive electrode active material or certainly may be provided with the positive electrode active material. For example, a lithium source material, potassium metal, or sodium metal may further be filled and/or deposited in the foamed metal, and the lithium source material is lithium metal and/or a lithium-rich material.

In some embodiments, the negative electrode may be a negative electrode plate, and the negative electrode plate may include a negative electrode current collector.

For example, the negative electrode current collector may be a metal foil, foamed metal, or a composite current collector. For example, the metal foil may be made of silver-surface-processed aluminum or stainless steel, stainless steel, copper, aluminum, nickel, a carbon electrode, carbon, nickel, or titanium. The foamed metal may be foamed nickel, foamed copper, foamed aluminum, foamed alloy, or foamed carbon. The composite current collector may include a polymer material base layer and a metal layer. The composite current collector may be formed by forming a metal material (such as copper, copper alloy, nickel, nickel alloy, titanium, titanium alloy, silver, or silver alloy) on a polymer material substrate (such as a substrate of polypropylene, polyethylene terephthalate, polybutylene terephthalate, polystyrene, or polyethylene).

For example, the negative electrode plate may include a negative electrode current collector and a negative electrode active material arranged on at least one surface of the negative electrode current collector.

For example, the negative electrode current collector has two surfaces opposite to each other in a thickness direction of the negative electrode current collector, and the negative electrode active material is arranged on either or both of the two opposite surfaces of the negative electrode current collector.

For example, the negative electrode active material may be a negative electrode active material used for a battery cell and well known in the art. For example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compound, silicon-carbon composite, silicon-nitrogen composite, or silicon alloy. The tin-based material may be selected from at least one of elemental tin, tin-oxygen compound, or tin alloy. However, the present application is not limited to such materials, and may alternatively use other conventional materials that can be used as negative electrode active materials for batteries. One type of these negative electrode active materials may be used individually, or two or more types of these negative electrode active materials may be used in combination.

In some embodiments, a material of the positive electrode current collector may be aluminum, and a material of the negative electrode current collector may be copper.

In some implementations, the electrode assembly further includes an isolation member, and the isolation member is arranged between the positive electrode and the negative electrode.

In some implementations, the isolation member is a separator. A type of the separator is not particularly limited in the present application, and any well-known separator with a porous structure having good chemical stability and mechanical stability may be selected.

For example, a main material of the separator may be selected from at least one of glass fiber, nonwoven fabric, polyethylene, polypropylene, polyvinylidene fluoride, or ceramic. The separator may be a single-layer film or a multi-layer composite film, which is not particularly limited. When the separator is a multi-layer composite film, materials of the layers may be the same or different, which is not particularly limited. The isolation member may be an independent component located between the positive electrode and the negative electrode or may be attached to surfaces of the positive electrode and the negative electrode.

In some implementations, the isolation member is a solid electrolyte. The solid electrolyte is arranged between the positive electrode and the negative electrode, to transmit ions and separate the positive electrode from the negative electrode.

In some implementations, the battery cell further includes an electrolyte, and the electrolyte transmits ions between the positive electrode and the negative electrode. A type of the electrolyte is not specifically limited in the present application, and may be selected as required. The electrolyte may be liquid, gelled, or solid.

The liquid electrolyte includes an electrolyte salt and a solvent.

In some implementations, the electrolyte salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfonimide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may optionally be an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether.

The gelled electrolyte includes a skeleton network using a polymer as an electrolyte, with an ionic liquid-lithium salt.

The solid electrolyte includes a polymeric solid electrolyte, an inorganic solid electrolyte, and a composite solid electrolyte.

For example, the polymeric solid electrolyte may be polyether (polyoxyethylene), polysiloxane, polycarbonate, polyacrylonitrile, polyvinylidene fluoride, polymethylmethacrylate, single-ionic polymer, a polyionic liquid-lithium salt, or cellulose.

For example, the inorganic solid electrolyte may be one or more of an oxide solid electrolyte (crystalline perovskite, a sodium superionic conductor, garnet, an amorphous LiPON film), a sulfide solid electrolyte (a crystalline lithium superionic conductor (lithium germanium phosphorus sulfur or argyrodite) or an amorphous sulfide), a halide solid electrolyte, a nitride solid electrolyte, and a hydride solid electrolyte.

For example, the composite solid electrolyte is formed by filling the inorganic solid electrolyte into the polymeric solid electrolyte.

In some implementations, the electrode assembly is a wound structure. The positive electrode plate and the negative electrode plate are wound into a wound structure.

In some implementations, the electrode assembly is a laminated structure.

For example, a plurality of positive electrode plates and a plurality of negative electrode plates may be arranged respectively, and the plurality of positive electrode plates and the plurality of negative electrode plates are alternately stacked.

For example, a plurality of positive electrode plates may be arranged, the negative electrode plate may be folded to form a plurality of folding segments that are stacked, and one positive electrode plate is clamped between adjacent folding segments.

For example, the positive electrode plate and the negative electrode plate are both folded to form a plurality of folding segments that are stacked.

For example, a plurality of isolation members may be arranged, which are respectively arranged between any adjacent positive electrode plates or negative electrode plates.

For example, the isolation members may be continuously arranged, and are arranged between any adjacent positive electrode plates or negative electrode plates in a folding or winding manner.

In some implementations, the electrode assembly may be in a shape of a cylinder, a flat shape, or a polygon prism.

In some implementations, the electrode assembly is provided with a tab, and the tab may output a current from the electrode assembly. The tab includes a positive electrode tab and a negative electrode tab.

For example, the battery cell may be a cylindrical battery cell, a prismatic battery cell, a soft pack battery cell, or a battery cell in another shape. The prismatic battery cell includes a square-housing battery cell, a blade-shaped battery cell, or a polygon prismatic battery. The polygon prismatic battery is, for example, a hexagonal prismatic battery, which is not particularly limited in the present application.

The battery mentioned in the embodiments of the present application is a single physical module including one or more battery cells to provide a higher voltage and a higher capacity.

In some embodiments, the battery may be a battery module, and when there are a plurality of battery cells, the plurality of battery cells are arranged and fixed to form a battery module.

In some embodiments, the battery may be a battery pack, the battery pack includes a box and a battery cell, and the battery cell or the battery module is accommodated in the box.

In some embodiments, the box may be used as a part of a chassis structure of a vehicle. For example, a part of the box may become at least a part of a floor of the vehicle, or a part of the box may become at least a part of a cross beam and a longitudinal beam of the vehicle.

In some embodiments, the battery may be an energy storage apparatus. The energy storage apparatus includes an energy storage container, an energy storage electric cabinet, or the like.

In some embodiments, the battery cell may include a housing. The housing is configured to package components such as the electrode assembly and the electrolyte. The housing may be a steel housing, an aluminum housing, a plastic housing (for example, polypropylene), a composite metal housing (for example, a copper-aluminum composite housing), an aluminum-plastic film, or the like. The housing can protect the electrode assembly from an outer side, to prevent external foreign objects from affecting charging or discharging of the electrode assembly.

The battery cell may further include an insulating member arranged on an outer side of the electrode assembly. The insulating member can protect the electrode assembly, so that a possibility that metal particles puncture the electrode assembly is reduced, and a risk of short circuit is reduced, thereby improving the reliability of the battery cell. However, an outer surface of the insulating member is relatively smooth, so that when the battery cell is subject to external impact, the insulating member encounters relatively small friction resistance. As a result, the electrode assembly is likely to vibrate or slide in the housing, causing a risk of failure of the battery cell (for example, the tab is likely to be cracked during sliding of the electrode assembly), and affecting the reliability of the battery cell.

In view of this, an embodiment of the present application provides a technical solution. In the technical solution, a patch with relatively high surface roughness is attached to an outer side of the insulating member, so that when the battery cell is subject to external impact, sliding of the electrode assembly in the housing is reduced, and a risk of failure of the battery cell is reduced, thereby improving the reliability of the battery cell.

The technical solution described in this embodiment of the present application is applicable to a battery and a power consuming device using the battery.

The power consuming device may be a vehicle, a mobile phone, a portable device, a notebook computer, a ship, a spacecraft, an electric toy, an electric tool, or the like. The vehicle may be a fuel powered vehicle, a gas powered vehicle, or a new energy vehicle. The new energy vehicle may be a pure electric vehicle, a hybrid electric vehicle, or an extended range vehicle. The spacecraft includes an airplane, a rocket, a space shuttle, or a space ship. The electric toy includes a fixed or mobile electric toy, such as a game console, an electric vehicle toy, an electric ship toy, or an electric airplane toy. The electric tool includes a metal cutting electric tool, a grinding electric tool, an assembly electric tool, or a railway electric tool, for example, an electric drill, an electric grinding machine, an electric wrench, an electric screwdriver, an electric hammer, an impact drill, a concrete vibrator, or an electric planer. The power consuming device is not particularly limited in the embodiments of the present application.

For ease of description, in the following embodiments, description is provided by using an example in which the power consuming device is a vehicle.

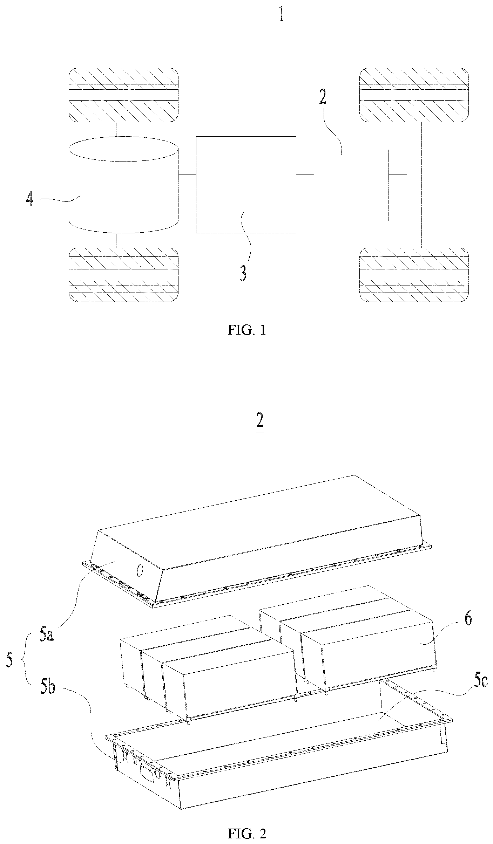

FIG. 1 is a schematic structural diagram of a vehicle according to some embodiments of the present application.

As shown in FIG. 1, a battery 2 is arranged inside the vehicle 1, and the battery 2 may be arranged at a bottom, head, or tail of the vehicle 1. The battery 2 may be configured to supply power to the vehicle 1. For example, the battery 2 may be used as an operating power supply of the vehicle 1.

The vehicle 1 may further include a controller 3 and a motor 4. The controller 3 is configured to control the battery 2 to supply power to the motor 4, for example, to meet operating electricity requirements during starting, navigation, and traveling of the vehicle 1.

In some embodiments of the present application, the battery 2 can not only be used as the operating power supply of the vehicle 1, but can also be used as a driving power supply of the vehicle 1, to alternatively or partially replace fuel or natural gas to provide driving power for the vehicle 1.

FIG. 2 is a schematic exploded view of a battery according to some embodiments of the present application.

As shown in FIG. 2, the battery 2 includes a box 5 and a battery cell (not shown), and the battery cell is accommodated in the box 5.

The box 5 is configured to accommodate the battery cell, and the box 5 may use a plurality of structures. In some embodiments, the box 5 may include a first box portion 5a and a second box portion 5b, the first box portion 5a and the second box portion 5b cover each other, and the first box portion 5a and the second box portion 5b jointly define an accommodating space 5c for accommodating the battery cell. The second box portion 5b may be a hollow structure being open on one side, the first box portion 5a is a plate-like structure, and the first box portion 5a covers an open side of the second box portion 5b, to form the box 5 having the accommodating space 5c. Alternatively, each of the first box portion 5a and the second box portion 5b may be a hollow structure being open on one side, and an open side of the first box portion 5a covers an open side of the second box portion 5b, to form the box 5 having the accommodating space 5c. Certainly, the first box portion 5a and the second box portion 5b may be in various shapes, such as a cylinder, or a cuboid.

To improve the sealing performance after the first box portion 5a and the second box portion 5b are connected, and a sealing member, for example, a sealant or a sealing ring, may also be arranged between the first box portion 5a and the second box portion 5b.

Assuming that the first box portion 5a covers a top of the second box portion 5b, the first box portion 5a may also be referred to as an upper box cover, and the second box portion 5b may also be referred to as a lower box.

In the battery 2, there may be one or a plurality of battery cells. If there are a plurality of battery cells, the plurality of battery cells may be connected in series, parallel, or series-parallel. Series-parallel connection means that both series connection and parallel connection exist among the plurality of battery cells. The plurality of battery cells may be directly connected in series, parallel, or series-parallel together, and then a whole formed by the plurality of battery cells may be accommodated in the box 5. Certainly, a plurality of battery modules 6 may be formed by the plurality of battery cells that are first connected in series, parallel, or series-parallel, and the plurality of battery modules 6 are then connected in series, parallel, or series-parallel to form a whole and accommodated in the box 5.

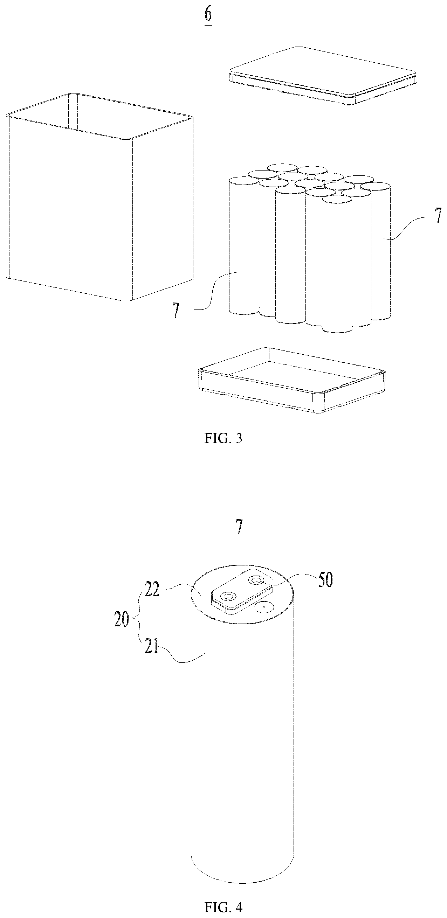

FIG. 3 is a schematic structural diagram of a battery module shown in FIG. 2.

As shown in FIG. 3, in some embodiments, there are a plurality of battery cells 7, and the plurality of battery cells 7 are first connected in series, parallel, or series-parallel to form a plurality of battery modules 6. The plurality of battery modules 6 are then connected in series, parallel, or series-parallel to form a whole and accommodated in the box.

The plurality of battery cells 7 in the battery module 6 may be electrically connected through a bus component, to implement series connection, parallel connection, or series-parallel connection among the plurality of battery cells 7 in the battery module 6.

The battery cell 7 may be a cylindrical battery cell, a square battery cell, or a battery cell in another shape.

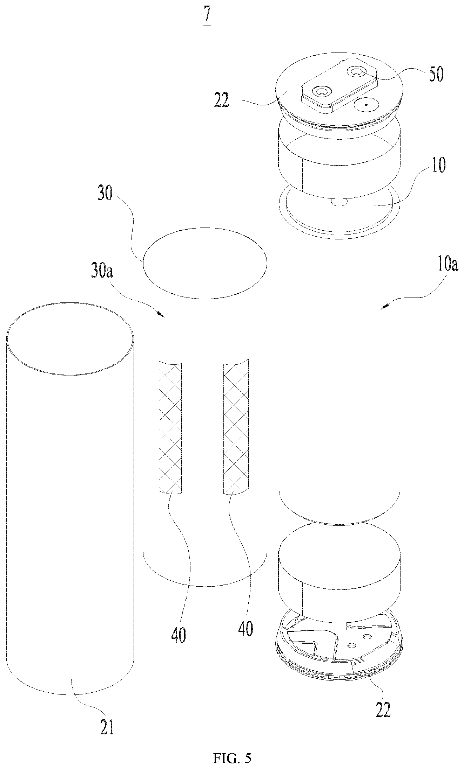

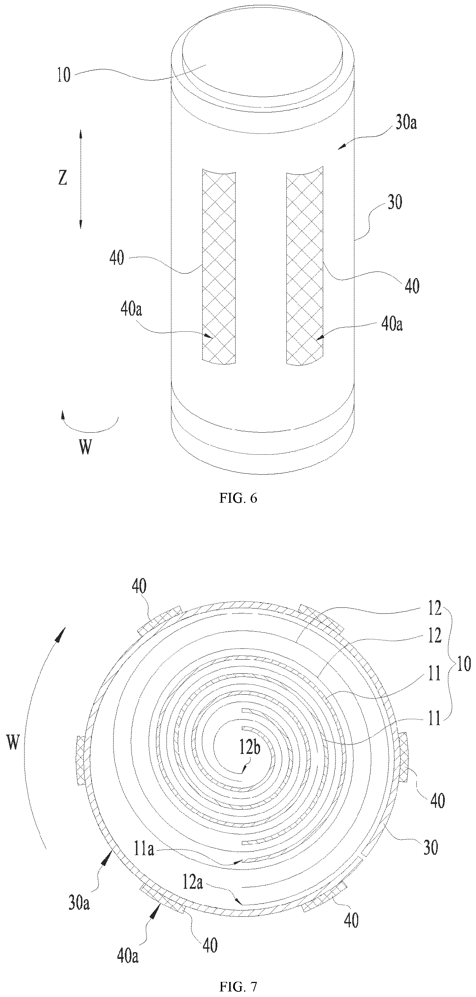

FIG. 4 is a schematic structural diagram of a battery cell according to some embodiments of the present application. FIG. 5 is a schematic exploded view of the battery cell shown in FIG. 4. FIG. 6 is a schematic structural diagram of an electrode assembly, an insulating member, and a patch of a battery cell according to some embodiments of the present application. FIG. 7 is a schematic cross-sectional view of the electrode assembly, the insulating member, and the patch shown in FIG. 6.

As shown in FIG. 4 to FIG. 7, the battery cell 7 in the embodiments of the present application includes a housing 20, an electrode assembly 10, an insulating member 30, and a patch 40. The electrode assembly 10 is accommodated in the housing 20. The insulating member 30 is arranged on an outer side of the electrode assembly 10, and the insulating member 30 has a first outer surface 30a on a side facing away from the electrode assembly 10. The patch 40 is attached to the first outer surface 30a and covers a part of the first outer surface 30a, the patch 40 has a second outer surface 40a on a side facing away from the insulating member 30, and surface roughness of at least a partial region of the second outer surface 40a is greater than surface roughness of the first outer surface 30a.

The housing 20 is a hollow structure, and an accommodating space configured to accommodate the electrode assembly 10 and an electrolyte is formed inside the housing. A shape of the housing 20 may be determined according to a specific shape of the electrode assembly 10. For example, if the electrode assembly 10 is a cuboid structure, a cuboid housing may be selected; and if the electrode assembly 10 is a cylindrical structure, a cylindrical housing may be selected.

The housing 20 may be made of a plurality of materials. For example, the material of the housing 20 may be metal or plastic. Optionally, the material of the housing 20 may be copper, iron, aluminum, steel, or aluminum alloy.

There may be one or a plurality of electrode assemblies 10. When there are a plurality of electrode assemblies 10, the plurality of electrode assemblies 10 may be stacked. For example, there are a plurality of electrode assemblies 10, and the insulating member 30 is attached to an outer peripheral surface of at least one electrode assembly 10.

There may be one or a plurality of patches 40.

The patch 40 covers only a part of the first outer surface 30a. In other words, a part of the first outer surface 30a is not covered by the patch 40.

In the embodiments of the present application, "attachment" may be adhesion and connection. For example, the patch 40 may be attached to the first outer surface 30a through adhesion, coating, or another manner.

In some examples, the surface roughness of an entire region of the second outer surface 40a is greater than the surface roughness of the first outer surface 30a. In some other examples, the surface roughness of a partial region of the second outer surface 40a is greater than the surface roughness of the first outer surface 30a.

For example, when roughness of a region of the first outer surface 30a is measured, a unit area may be captured from the region of the insulating member 30 for measurement. Optionally, a circle with a diameter of 10 mm may be captured for measurement.

For example, when roughness of a region of the second outer surface 40a is measured, a unit area may be captured from the region of the patch 40 for measurement. Optionally, a circle with a diameter of 10 mm may be captured for measurement.

In a shaping process of the battery cell 7, metal particles may remain in the housing 20. The insulating member 30 can protect the electrode assembly 10, so that a possibility that the metal particles puncture the electrode assembly 10 is reduced, and a risk of short circuit is reduced, thereby improving the reliability of the battery cell 7. The second outer surface 40a of the patch 40 has relatively large surface roughness. Therefore, when the battery cell 7 is subject to external impact, the patch 40 encounters relatively large friction resistance, so that sliding of the electrode assembly 10 in the housing 20 is reduced through the insulating member 30, and a risk of failure of the battery cell 7 is reduced, thereby improving the reliability of the battery cell 7. The patch 40 covers only a part of the first outer surface 30a, an edge of the patch 40 forms a step structure protruding from the first outer surface 30a, and the step structure can also increase resistance to movement of the patch 40 when the battery cell 7 is subject to external impact, thereby reducing sliding of the electrode assembly 10 in the housing 20.

The patch 40 covers only a part of the first outer surface 30a, so that space occupied by the patch 40 can also be reduced, thereby improving an energy density of the battery cell 7.

In some embodiments, in a production process of the battery cell 7, the electrode assembly 10 generally needs to be clamped through a fixture, to implement transportation or processing on the electrode assembly 10 (for example, kneading processing on the tab of the electrode assembly 10). The insulating member 30 and the patch 40 cover the outer side of the electrode assembly 10, so that direct contact between the fixture and the electrode assembly 10 can also be reduced, thereby reducing a risk that the separator and the plate are damaged. In addition, the fixture may clamp the patch 40, and the second outer surface 40a of the patch 40 has relatively large surface roughness. In this way, relative sliding between the patch 40 and the fixture generated during processing on the electrode assembly 10 may be reduced, so that a risk of misalignment between the plate and the separator caused by sliding is reduced, thereby improving the reliability of the electrode assembly 10.

For example, in a kneading process of the tab, a kneading device may apply a thrust to the electrode assembly 10. The second outer surface 40a of the patch 40 has relatively large surface roughness, so that relative sliding between the patch 40 and the fixture under an action of the thrust can be reduced, thereby reducing misalignment of the separator film, and reducing a risk that the separator is burned in subsequent welding process.

In some embodiments, the housing 20 includes a shell 21 and an end cap 22, the shell 21 has an opening, and the end cap 22 is configured to cover the opening.

The shell 21 is a component configured to form an internal cavity of the battery cell 7 together with the end cap 22, where the formed internal cavity may be configured to accommodate the electrode assembly 10, an electrolyte, and other components.

The shell 21 and the end cap 22 may be independent components. For example, the opening may be provided on the shell 21, and the end cap 22 covers the opening at the opening to form the internal cavity of the battery cell 7.

The shell 21 may be of various shapes and sizes, such as a rectangular shape, a cylindrical shape, or a hexagonal prism shape. Specifically, the shape of the shell 21 may be determined according to a specific shape and size of the electrode assembly 10. The shell 21 may be made of various materials, for example, copper, iron, aluminum, stainless steel, or aluminum alloy, which is not particularly limited in the embodiments of the present application.

A shape of the end cap 22 may be adapted to the shape of the shell 21 to fit the shell 21. Optionally, the end cap 22 may be made of a material with specific hardness and strength (for example, aluminum alloy), so that the end cap 22 is less likely to deform under extrusion and collision, enabling the battery cell 7 to have a higher structural strength and enhanced reliability.

The end cap 22 is connected to the shell 21 in a welding, adhesion, clamping, or another manner.

In some examples, the shell 21 may be a structure being open on one side, and one end cap 22 is arranged and covers the shell 21. In some other examples, the shell 21 may alternatively be a structure being open on two sides, two end caps 22 are arranged, and the two end caps 22 respectively cover two openings of the shell 21.

In some embodiments, the battery cell 7 further includes an electrode terminal 50 arranged in the housing 20, and the electrode terminal 50 is electrically connected to the electrode assembly 10.

In some embodiments, at least a part of the electrode terminal 50 is exposed to the outside of the housing 20, to implement electrical connection to another structure (for example, a bus component). The electrode terminal 50 may be configured to electrically connect the electrode assembly 10 to a circuit outside the battery cell 7, to implement charging and discharging.

There may be one or a plurality of electrode terminals 50. In some examples, there is one electrode terminal 50, one of the electrode terminal 50 and the housing 20 is electrically connected to the positive electrode plate, the other is electrically connected to the negative electrode plate, and the electrode terminal 50 and the housing 20 are used as two output electrodes of the battery cell 7. In some other examples, there are two electrode terminals 50, where one electrode terminal 50 is electrically connected to the positive electrode plate, and the other electrode terminal 50 is electrically connected to the negative electrode plate.

In some embodiments, the electrode terminal 50 is arranged on the end cap 22.

In some embodiments, there are two end caps 22, there are two electrode terminals 50, and the two electrode terminals 50 are respectively arranged on the two end caps 22.

In some embodiments, the surface roughness of the at least a partial region of the second outer surface 40a is greater than or equal to 10 µm.

The at least a partial region of the second outer surface 40a has relatively large surface roughness. Therefore, when the battery cell 7 is subject to external impact, the patch 40 encounters relatively large friction resistance, so that sliding of the electrode assembly 10 in the housing 20 is reduced, and a risk of failure of the battery cell 7 is reduced, thereby improving the reliability of the battery cell 7.

In some embodiments, the surface roughness of the second outer surface 40a is greater than or equal to 10 µm.

The surface roughness of an entire region of the second outer surface 40a is greater than or equal to 10 µm. In other words, a sample of a unit area is captured on the patch 40 arbitrarily, and surface roughness of the sample is greater than or equal to 10 µm.

The second outer surface 40a has relatively large surface roughness. Therefore, when the battery cell 7 is subject to external impact, the patch 40 encounters relatively large friction resistance, so that sliding of the electrode assembly 10 in the housing 20 is reduced, and a risk of failure of the battery cell 7 is reduced, thereby improving the reliability of the battery cell 7.

In addition, in a production process of the battery cell 7, the fixture may clamp any region of the patch 40, so that the production efficiency may be improved.

In some embodiments, the surface roughness of the second outer surface 40a is greater than or equal to 100 µm. Therefore, when the battery cell 7 is subject to external impact, the friction resistance to the patch 40 is further increased, so that sliding of the electrode assembly 10 in the housing 20 is reduced, and a risk of failure of the battery cell 7 is reduced, thereby improving the reliability of the battery cell 7.

In some embodiments, the surface roughness of the second outer surface 40a is Ra, and Ra meets: 10 µm≤Ra≤ 3600 µm.

Larger surface roughness of the second outer surface 40a indicates a larger entire thickness of the patch 40 and larger space occupied by the patch 40.

In the embodiments of the present application, by setting Ra to range from 10 µm to 3600 µm, the friction resistance to the patch 40 and space occupied by the patch 40 are balanced, so that a loss of an energy density of the battery cell 7 is reduced while the friction resistance to the patch 40 meets a requirement.

Optionally, Ra is 10 µm, 20 µm, 50 µm, 100 µm, 200 µm, 300 µm, 400 µm, 500 µm, 800 µm, 1000 µm, 1500 µm, 2000 µm, 2500 µm, 3000 µm, 3200 µm, 3400 µm, or 3600 µm.

In some embodiment, 300 µm≤Ra≤600 µm, to further balance the friction resistance to the patch 40 and the space occupied by the patch 40, so that a loss of an energy density of the battery cell 7 is reduced while the friction resistance to the patch 40 meets a requirement.

In some embodiments, a total area of the first outer surface 30a is S1, an area of a region of the first outer surface 30a covered by the patch 40 is S2, and 0.02≤S2/S1≤0.5.

For example, when there are a plurality of patches 40, S2 is a total area of regions of the first outer surface 30a covered by the plurality of patches 40.

S2/S1 is positively correlated with the friction resistance to the patch 40, and is also positively correlated with the space occupied by the patch 40.

In the embodiments of the present application, the friction resistance to the patch 40 and the space occupied by the patch 40 may be balanced, so that a loss of an energy density of the battery cell 7 is reduced while the friction resistance to the patch 40 meets a requirement.

Optionally, S2/S1 may be 0.02, 0.05, 0.1, 0.15, 0.2, 0.25, 0.3, 0.35, 0.4, 0.45, or 0.5.

In some embodiments, the electrode assembly 10 includes a plate 11 and an isolation member 12 that are arranged in a winding manner; and the insulating member 30 is attached to the isolation member 12 and is configured to restrain a winding tail end 12a of the isolation member 12.

The electrode assembly 10 may include a plurality of plates 11, the plurality of plates 11 may include a positive electrode plate and a negative electrode plate, and the isolation member 12 may be arranged between the positive electrode plate and the negative electrode plate, to prevent short circuit between the positive electrode and the negative electrode and to allow active ions to pass through.

The electrode assembly 10 may be in a shape of a cylinder, a flat shape, or a polygon prism. Optionally, the electrode assembly 10 is a cylindrical structure.

For example, the electrode assembly 10 is a wound structure.

When the isolation member 12 is in an unfolded state, two ends of the isolation member 12 in a length direction is a winding head end 12b and a winding tail end 12a. In a wound state, the winding head end 12b is close to the inside of the electrode assembly 10, and the winding tail end 12a is close to the outside of the electrode assembly 10. In a winding shaping process of the electrode assembly 10, the isolation member 12 starts winding from the winding head end 12b and ends winding at the winding tail end 12a.

The insulating member 30 can restrain the isolation member 12, to reduce a risk that the isolation member 12 is scattered, thereby reducing deformation of the electrode assembly 10.

In some embodiments, in a winding direction of the electrode assembly 10, an extension size of the insulating member 30 is greater than or equal to 1/4 of a perimeter of an outer peripheral surface 10a of the electrode assembly 10. Optionally, the extension size of the insulating member 30 is greater than or equal to 1/2 of the perimeter of the outer peripheral surface 10a of the electrode assembly 10.

In some embodiments, the insulating member 30 surrounds the electrode assembly 10. Certainly, due to a process error, the two ends of the insulating member 30 in the winding direction are not necessarily docked exactly, a relatively small gap may be kept between the two ends of the insulating member 30, and the two ends of the insulating member 30 may also be bridged.

The insulating member 30 surrounds the electrode assembly 10, so that the outer peripheral surface 10a of the electrode assembly 10 can be effectively covered, thereby reducing a risk that the electrode assembly 10 is punctured by the metal particles.

In some embodiments, the electrode assembly 10 is in a shape of a cylinder. The outer peripheral surface 10a of the electrode assembly 10 is approximately a cylindrical surface.

For example, the insulating member 30 is substantially bent into an arc shape. Correspondingly, the first outer surface 30a of the insulating member 30 is substantially an arc surface. Optionally, the insulating member 30 may be a rectangular sheet in an unfolded state.

In some embodiments, in a thickness direction of the patch 40, the patch 40 does not overlap with the winding tail end 11a of the plate 11.

For example, when the patch 40 is bent into an arc shape, the thickness direction of the patch 40 at any point may be a normal direction at the point.

The electrode assembly 10 may be expanded during charging, the expanded electrode assembly 10 squeezes the housing 20 through the patch 40, and correspondingly, the housing 20 also applies a reaction force to the electrode assembly 10 through the patch 40. If the patch 40 overlaps with the winding tail end 11a of the plate 11, the winding tail end 11a of the plate 11 encounters a relatively large reaction force, leading to stress concentration or even a risk that the plate 11 is crushed. In the embodiments of the present application, the patch 40 does not overlap with the winding tail end 11a of the plate 11, so that a force on the winding tail end 11a of the plate 11 may be reduced, thereby reducing stress concentration, reducing a risk that the plate 11 is broken, and improving the cycle performance of the battery cell 7.

In some embodiments, the battery cell 7 includes a plurality of patches 40, and the plurality of patches 40 are arranged at intervals.

The plurality of patches 40 may be arranged at equal intervals, or may be arranged at unequal intervals.

In a case that a total area is consistent, compared with attaching a single patch with a relatively large area, a plurality of patches 40 with a relatively small area are attached, so that the electrode assembly 10 encounters more uniform resistance when the battery cell 7 is subject to external impact, thereby reducing an offset risk of the electrode assembly 10. In addition, the edge 40b of each patch 40 may form a step structure protruding from the first outer surface 30a, and the step structure can also increase the resistance to movement of the patch 40 when the battery cell 7 is subject to external impact.

In some embodiments, the plurality of patches 40 are arranged at intervals in a circumferential direction W of the electrode assembly 10. In the circumferential direction W of the electrode assembly 10, the plurality of patches 40 may be arranged at equal intervals, or may be arranged at unequal intervals.

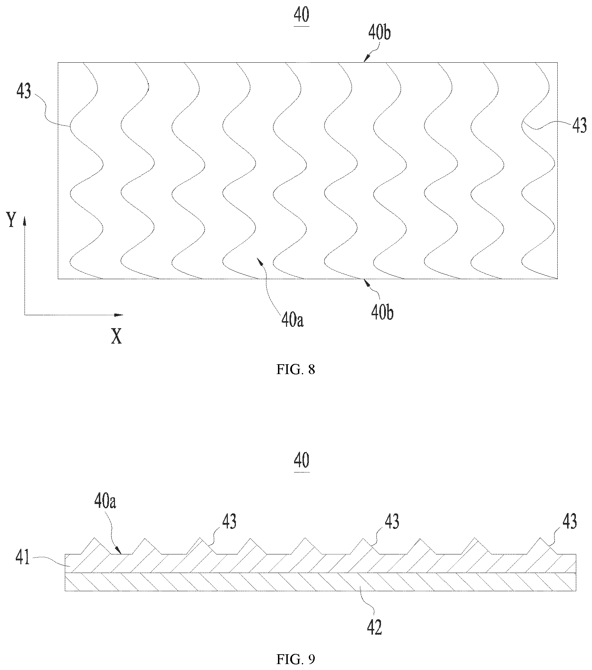

FIG. 8 is a schematic diagram of a patch in an unfolded state according to some embodiments of the present application. FIG. 9 is a schematic cross-sectional view of the patch shown in FIG. 8.

As shown in FIG. 8 and FIG. 9, in some embodiments, the patch 40 includes a base layer 41 and an adhesive layer 42, and the adhesive layer 42 is arranged between the first outer surface 30a and the base layer 41 and adheres the first outer surface 30a and the base layer 41. The base layer 41 includes the second outer surface 40a.

By arranging the adhesive layer 42, the base layer 41 may be adhered to the first outer surface 30a, so that relative sliding between the base layer 41 and the insulating member 30 is reduced when the battery cell 7 is subject to external impact. The base layer 41 can separate the adhesive layer 42 from the housing 20, thereby reducing a risk of friction abrasion of the adhesive layer 42.

In some embodiments, the insulating member 30 is a tape. Optionally, the insulating member 30 is a blue tape.

In some embodiments, the patch 40 may be a tape. Optionally, the patch 40 is a crepe tape.

In some embodiments, in the unfolded state, the patch 40 is in a shape of a rectangle.

In some embodiments, the second outer surface 40a is provided with a plurality of protrusions 43 that are arranged at intervals.

In the embodiments of the present application, the protrusions 43 are arranged on the second outer surface 40a to increase the surface roughness of the second outer surface 40a, so that when the battery cell 7 is subject to external impact, the friction resistance to the patch 40 is increased, sliding of the electrode assembly 10 in the housing 20 is reduced, and a risk of failure of the battery cell 7 is reduced, thereby improving the reliability of the battery cell 7.

For example, the second outer surface 40a includes exposed surfaces of the protrusions 43.

In some embodiments, the base layer 41 includes a plurality of protrusions 43.

In some embodiments, the protrusion 43 is in a shape of a curve. For example, the protrusion 43 is rippled.

When the battery cell 7 is subject to external impact, the curve-shaped protrusion 43 can generate relatively large friction resistance in many directions, so that sliding of the electrode assembly 10 in the housing 20 is effectively reduced, and a risk of failure of the battery cell 7 is reduced, thereby improving the reliability of the battery cell 7.

In some embodiments, two ends of the protrusion 43 respectively extend to two opposite edges 40b of the second outer surface 40a.

In the embodiments of the present application, the protrusion 43 has a relatively large extension length, so that a contact area between the protrusion 43 and the housing 20 may be increased. In this way, when the battery cell 7 is subject to external impact, the friction resistance is increased, thereby effectively reducing sliding of the electrode assembly 10 in the housing 20.

In some embodiments, the plurality of protrusions 43 are arranged at intervals in a first direction X, the two ends of each of the protrusions 43 respectively extend to two edges 40b of the second outer surface 40a in a second direction Y, and the first direction X may be perpendicular to the second direction Y.

For example, in the unfolded state, one of the first direction X and the second direction Y is a length direction of the patch 40, and the other is a width direction of the patch 40.

In an alternative embodiment, another processing may also be performed on the patch 40, and the surface roughness of the second outer surface 40a is also increased.

For example, in some examples, the surface roughness of the second outer surface 40a may be increased by providing recessed portions on the second outer surface 40a. In some other embodiments, the surface roughness of the second outer surface 40a may be increased by spraying particles on the patch 40.

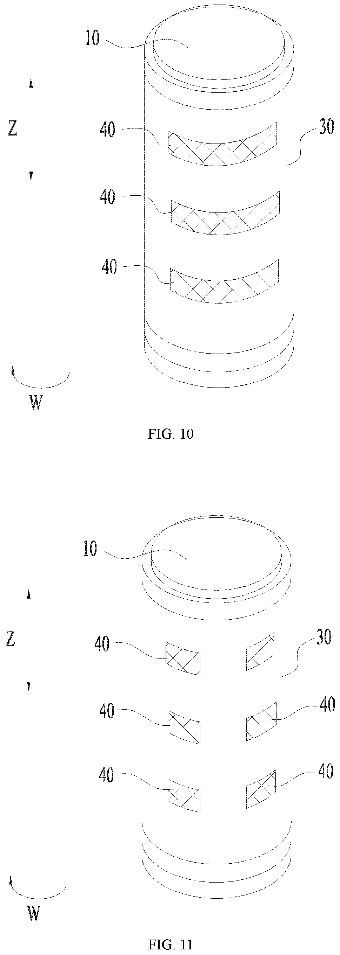

FIG. 10 is a schematic structural diagram of an electrode assembly, an insulating member, and a patch of a battery cell according to some other embodiments of the present application.

As shown in FIG. 10, in some embodiments, the plurality of patches 40 are arranged at intervals in a direction perpendicular to the circumferential direction W.

For example, the electrode assembly 10 is a wound structure, and a winding axial direction Z of the electrode assembly 10 is perpendicular to the circumferential direction W of the electrode assembly 10. The plurality of patches 40 are arranged at intervals in the winding axial direction.

FIG. 11 is a schematic structural diagram of an electrode assembly, an insulating member, and a patch of a battery cell according to yet some other embodiments of the present application.

As shown in FIG. 11, in some embodiments, the plurality of patches 40 are arranged at intervals in the winding axial direction Z and form patch columns, and the plurality of patch columns are arranged at intervals in the circumferential direction W of the electrode assembly 10. Optionally, when the insulating member 30 is in the unfolded state, the plurality of patches 40 are arranged on the first outer surface 30a in a rectangular array.

According to some embodiments of the present application, the present application further provides a battery, including a plurality of battery cells according to any one of the foregoing embodiments.

According to some embodiments of the present application, the present application further provides a power consuming device, including the battery cell according to any one of the foregoing embodiments, where the battery cell is configured to provide electric energy for the power consuming device. The power consuming device may be any device or system in which the foregoing battery cell is used.

Referring to FIG. 4 to FIG. 7, an embodiment of the present application provides a battery cell 7, including a housing 20, an electrode assembly 10, an insulating member 30, and a plurality of patches 40.

The electrode assembly 10 is accommodated in the housing 20 and includes a plate 11 and an isolation member 12, and the plate 11 and the isolation member 12 are wound and form a cylindrical wound structure. The insulating member 30 surrounds the electrode assembly 10 and is attached to an outer peripheral surface 10a of the electrode assembly 10, and the insulating member 30 covers a winding tail end 12a of the isolation member 12.

The insulating member 30 has a first outer surface 30a on a side facing away from the electrode assembly 10. The plurality of patches 40 are attached to the first outer surface 30a and arranged at intervals. The patch 40 has a second outer surface 40a on a side facing away from the insulating member 30, and surface roughness of at least a partial region of the second outer surface 40a is greater than surface roughness of the first outer surface 30a.

In some embodiments, the patch 40 is a crepe tape, and the second outer surface 40a is provided with a plurality of rippled protrusions 43.

Although the present application has been described with reference to the preferred embodiments, various modifications may be made thereto and components thereof may be replaced with equivalents without departing from the scope of the present application. Especially, as long as there is no structural conflict, the various technical features mentioned in each embodiment can be combined in any way. The present application is not limited to the particular embodiments disclosed herein, but includes all technical solutions that fall within the scope of the claims.

## Claims

1. A battery cell, comprising:
a housing;
an electrode assembly, accommodated in the housing;
an insulating member, arranged on an outer side of the electrode assembly, wherein the insulating member has a first outer surface on a side facing away from the electrode assembly; and
a patch, attached to the first outer surface and covering a part of the first outer surface, wherein the patch has a second outer surface on a side facing away from the insulating member, and surface roughness of at least a partial region of the second outer surface is greater than surface roughness of the first outer surface.

2. The battery cell according to claim 1, wherein the patch comprises a base layer and an adhesive layer, and the adhesive layer is arranged between the first outer surface and the base layer and adheres the first outer surface and the base layer; and
the base layer comprises the second outer surface.

3. The battery cell according to claim 1 or 2, wherein the second outer surface is provided with a plurality of protrusions that are arranged at intervals.

4. The battery cell according to claim 3, wherein the protrusion is in a shape of a curve.

5. The battery cell according to claim 3 or 4, wherein two ends of the protrusion respectively extend to two opposite edges of the second outer surface.

6. The battery cell according to any one of claims 1 to 5, wherein the battery cell comprises a plurality of patches, and the plurality of patches are arranged at intervals.

7. The battery cell according to claim 6, wherein the plurality of patches are arranged intervals in a circumferential direction of the electrode assembly; and/or
the plurality of patches are arranged at intervals in a direction perpendicular to the circumferential direction.

8. The battery cell according to any one of claims 1 to 7, wherein the surface roughness of the second outer surface is greater than or equal to 10 µm.

9. The battery cell according to claim 8, wherein the surface roughness of the second outer surface is Ra, and Ra meets: 10 µm≤Ra≤ 3600 µm.

10. The battery cell according to claim 9, wherein 300 µm≤Ra≤600 µm.

11. The battery cell according to any one of claims 1 to 10, wherein a total area of the first outer surface is S1, an area of a region of the first outer surface covered by the patch is S2, and 0.02≤S2/S1≤0.5.

12. The battery cell according to any one of claims 1 to 11, wherein the electrode assembly comprises a plate and an isolation member that are arranged in a winding manner; and
the insulating member is attached to the isolation member and is configured to restrain a winding tail end of the isolation member.

13. The battery cell according to claim 12, wherein the insulating member surrounds the electrode assembly.

14. The battery cell according to claim 12 or 13, wherein in a thickness direction of the patch, the patch does not overlap with the winding tail end of the plate.

15. A battery, comprising a plurality of battery cells according to any one of claims 1 to 14.

16. A power consuming device, comprising the battery cell according to any one of claims 1 to 14, wherein the battery cell is configured to provide electric energy.
